(19) Europäisches Patentamt
European Patent Office
Office européen des brevets

(11) EP 1 293 520 A1

(12) # DEMANDE DE BREVET EUROPEEN

(43) Date de publication:
**19.03.2003 Bulletin 2003/12**

(51) Int Cl.[7]: **C08F 220/12**, C08F 2/22, C09D 133/06

(21) Numéro de dépôt: **01000467.9**

(22) Date de dépôt: **14.09.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(71) Demandeur: **Cray Valley Kunstharze GmbH**
**47918 Tönisvorst (DE)**

(72) Inventeurs:
- **Font Panades, Carme**
  **08192 Sant Quirze del Valles (ES)**
- **Albalat Perez, Jordi**
  **08032 Barcelone (ES)**
- **Ullenboom, Werner**
  **47495 Rheinberg (DE)**

(74) Mandataire: **Chaillot, Geneviève**
**Cabinet CHAILLOT,**
**16-20, avenue de L'Agent Sarre,**
**B.P. 74**
**92703 Colombes Cédex (FR)**

(54) **Dispersion aqueuse de polymère à léssivabilité élevée, sa préparation et son application comme liant dans des compositions de revêtement**

(57) Dispersion aqueuse de polymère, préparée à partir d'une composition de monomères comprenant :

(A) 50 à 99,99 parties en poids d'au moins un ester acrylique ou méthacrylique dérivé d'acide acrylique ou méthacrylique et d'un alcool ayant 1 à 12 atomes de carbone ;
(B) 0 à 40 parties en poids d'au moins un monomère vinylaromatique ;
(C) 0 à 5 parties en poids d'au moins un acide mono- ou polycarboxylique $\alpha,\beta$-insaturé à chaîne courte ; et
(D) 0,01 à 5 parties en poids d'au moins un composé (D) monomère alpha-bêta éthyléniquement insaturé, comportant au moins un groupement carbonyle ayant au moins un atome d'hydrogène porté par un atome de carbone en position alpha dudit carbonyle (diacétone (méth) acrylamide)

pour 100 parties en poids des monomères (A) + (B) + (C) + (D), 80 à 98 % en poids des composants monomères ayant été ajoutés à un milieu réactionnel contenant déjà une pré-émulsion totalement ou partiellement polymérisée représentant de 2 à 20 % en poids du taux global final des composants monomères dans la dispersion finalement obtenue.

EP 1 293 520 A1

## Description

La présente invention porte sur une dispersion aqueuse de polymère (latex) de type purement acrylique ou acrylique-styrénique, qui possède un pouvoir liant vis-à-vis des charges élevé; sur un procédé spécifique permettant de préparer cette dispersion aqueuse de polymère ; ainsi que sur l'application de cette dernière comme liant dans des compositions de revêtement, notamment dans des formulations de peinture, en particulier dans des formulations de peinture sans solvant (ou agent coalescent), possédant une excellente lessivabilité malgré un faible taux de liant, concernant plus particulièrement des peintures de protection et/ou de décoration à usage externe et/ou interne sur des substrats comme les parois murales, le bois, les métaux ou les matières plastiques.

Lorsqu'une dispersion aqueuse de polymère est appliquée sur un substrat et après que l'eau se soit évaporée, il apparaît un film à la surface dudit substrat en raison de la coalescence du polymère présent dans l'émulsion. Il faut que cette filmification soit bonne pour obtenir un film homogène. Pour une bonne filmification, le caractère viscoélastique des particules de polymère est essentiel. En fait, les forces de coalescence doivent dépasser la résistance des particules à la déformation (fluage). Pour cette raison, on utilise traditionnellement, pour modifier la nature viscoélastique du polymère :

- des plastifiants qui accroissent l'élongation et l'élasticité ; et
- des solvants (appelés aussi agents de coalescence) qui sont des plastifiants "fugitifs" car ils facilitent la déformation élastique des particules du latex.

- Les plastifiants ont cependant des inconvénients : celui de réduire la force de rupture de la résine dans laquelle ils sont incorporés et celui de présenter une odeur caractéristique.
- Les solvants présentent les inconvénients d'être volatils, dangereux à manipuler et/ou toxiques, et leur emploi n'est pas favorable à la protection de l'environnement.

Par ailleurs, une caractéristique applicative de la bonne filmification d'un revêtement est la lessivabilité qui est l'aptitude à résister aux craquelures et au pelage dans un environnement aqueux tel que les conditions ordinaires d'usage. Il existe des méthodes normalisées de mesure de cette lessivabilité connues par l'homme du métier.

D'après l'état antérieur de la technique, il a déjà été essayé d'améliorer la lessivabilité des latex de type purement acrylique ou de type styrène-acrylique en incluant dans la structure du polymère de faibles quantités d'un monomère fonctionnel supplémentaire.

Différents monomères de ce type ont été proposés, par exemple des monomères tels que des acides carboxyliques $C_5$ à $C_{36}$ et leurs sels d'ammonium, amides, esters, aldéhydes et alcools (demande de brevet EP-A-252 526), des esters d'acide acétoacétique (demande de brevet DE-A-2 535 372), des dérivés de l'éthylène urée (brevet US-A-4 500 673), des produits de réaction de l'aminoéthyl-2-éthylène urée et d'alkylglycidyléther (brevet US-A-4 426 503), des produits de réaction d'aminoalkyl alkylène urée, de monoépoxydes saturés et de monoisocyanate fonctionnalisé méthacrylate (US-A-4526915), des dérivés d'imidazolidinone (demande internationale WO-A-91/12 243), le N-(2,2-diméthoxyéthyl) méthacrylamide (demande de brevet EP-A-337 873), des glycidyléthers (demande de brevet EP-A-69 326).

Cependant, cette solution n'est pas satisfaisante ou adéquate pour différentes raisons: ces monomères coûtent cher, ils sont toxiques et/ou dangereux, et ils n'apportent pas les performances exigées pour certaines applications, qui sont d'atteindre des valeurs de lessivabilité élevées pour des taux de liant les plus bas possibles, en l'absence d'agent coalescent.

La demande européenne antérieure EP-A-0 690 882 de la Société Déposante qui représente l'état de la technique le plus proche de l'invention, décrit qu'une amélioration de la lessivabilité des peintures à base de latex du type purement acrylique ou acrylique-styrénique peut être obtenue avec un nouveau latex préparé par une voie bien particulière, sans avoir recours à des plastifiants, à des agents de coalescence et aux monomères particuliers évoqués ci-dessus.

Le latex en question (EP-A-0 690 882) est préparé à partir d'une composition de monomères comprenant :

- 60-100 parties en poids d'au moins un (méth)acrylate d'alkyle en $C_{1-12}$ ;
- 0-40 parties en poids d'au moins un monomère vinylaromatique ;
- 0-5 parties en poids d'au moins un acide mono- ou polycarboxylique $\alpha,\beta$-insaturé à chaîne courte ; et
- 0-3 parties en poids d'au moins un amide $\alpha,\beta$-insaturé à chaîne courte,

et obtenu par un procédé comprenant les deux étapes essentielles suivantes :

(1) dans une première étape, on introduit dans un réacteur 2 à 20% en poids de la composition des monomères

et on conduit une prépolymérisation partielle en émulsion, pour obtenir une pré-émulsion ayant une taille moyenne de particules de polymères ne dépassant pas 95 nm (on contrôle donc cette taille de particule) ; et

(2) dans une deuxième étape, on conduit une polymérisation complète en émulsion de la composition restante des monomères ajoutée à ladite pré-émulsion partiellement polymérisée.

Un traitement de post-cuisson est aussi décrit dans ce document permettant avantageusement d'atteindre un taux de monomère résiduel ne dépassant pas 50 ppm.

De telles émulsions conduisent à une amélioration de la lessivabilité, mais le niveau de lessivabilité et plus particulièrement le rapport de lessivabilité sur le taux de liant engagé dans la composition de revêtement restaient encore insuffisants pour des applications plus spécifiques visées par la présente invention, mentionnées plus haut. Déjà l'absence d'agent coalescent additionné dans les compositions de revêtement visées, rend la filmification de la composition de latex plus difficile et, par ailleurs, pour certaines applications, la stabilité au stockage de ces compositions avant usage reste à améliorer, tout en gardant une lessivabilité élevée pour un faible taux de liant visé, qui en général ne dépasse pas 10% en poids exprimé en extrait sec de latex. L'absence de stabilité au stockage se manifeste essentiellement par une augmentation de la viscosité du latex, avec le temps de stockage, du fait de la floculation croissante des particules de latex.

Il existe également un besoin de formulations de peinture qui, à performances au moins égales, nécessitent moins de taux de liant.

Recherchant à résoudre ce problème et à éliminer les inconvénients associés, la Société déposante a découvert que l'introduction de 0,01 à 5% en poids par rapport au taux global final de monomères d'au moins un composé alpha, bêta-éthyléniquement insaturé comportant au moins un groupement carbonyle ayant au moins un atome d'hydrogène porté par un atome de carbone en position alpha dudit carbonyle, permettait non seulement de résoudre le problème posé, mais encore, d'une manière surprenante, d'améliorer encore la lessivabilité d'un facteur significatif d'au moins 2 (selon la norme DIN 53778).

La présente invention a donc pour premier objet une dispersion aqueuse de polymère, pour second objet un procédé spécifique de préparation de cette dispersion et pour troisième objet une composition de revêtement de protection et/ou de décoration comprenant cette dispersion comme liant pour des applications spécifiques.

Le premier objet concerne donc une dispersion aqueuse de polymère, préparée à partir d'une composition de monomères comprenant :

(A) 50 à 99,99 parties en poids d'au moins un ester acrylique ou méthacrylique dérivé d'acide acrylique ou méthacrylique et d'un alcool ayant 1 à 12 atomes de carbone ;

(B) 0 à 40 parties en poids d'au moins un monomère vinylaromatique ;

(C) 0 à 5 parties en poids d'au moins un acide mono- ou polycarboxylique $\alpha,\beta$-insaturé à chaîne courte ; et

(D) 0,01 à 5 parties en poids d'au moins un composé (D) monomère alpha,bêta-éthyléniquement insaturé, comportant au moins un groupement carbonyle ayant au moins un atome d'hydrogène porté par un atome de carbone en position alpha dudit carbonyle,

pour 100 parties en poids des monomères (A) + (B) + (C) + (D),
avec 80 à 98 % en poids des composants monomères ayant été ajoutés à un milieu réactionnel contenant déjà une pré-émulsion partiellement ou complètement polymérisée représentant de 2 à 20 % en poids du taux global final des composants monomères dans la dispersion finalement obtenue.

La prépolymérisation est une prépolymérisation totale ou, de préférence, partielle, auquel cas elle est effectuée à une conversion d'au moins 50%, de préférence au moins 90% et jusqu'à moins de 100% de conversion, et en particulier à une conversion d'au moins 50% et de préférence au moins 90% de conversion, et jusqu'à une conversion de 98%.

En particulier, la dispersion aqueuse ne comporte aucun composant ou groupement fonctionnel susceptible de réagir avec les motifs issus dudit ou desdits composés (D) dans une réaction d'autoréticulation.

Parmi les composés (D), nous pouvons citer comme exemple les suivants : diacétone acrylamide (DAAM), diacétone méthacrylamide, 2-butanone (méth)acrylate, acétoacétate de vinyle, (méth)acrylate d'acétoacétoxyéthyle. Parmi les composés (D) les plus préférés, nous pouvons citer le diacétone acrylamide (DAAM) et le diacétone méthacrylamide selon la formule générale(I):

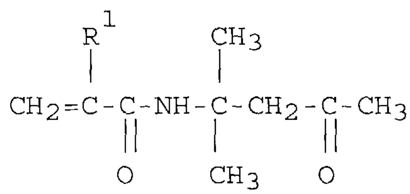 (I)

avec $R^1$ : H ou méthyle

La présence de tels composés et, en particulier, du diacétone acrylamide dans des dispersions aqueuses de polymères est déjà décrite dans l'état antérieur de la technique, mais sa fonction d'agent de réticulation nécessite la présence supplémentaire forcée dans cette dispersion d'un deuxième agent qui réagit avec les motifs issus (par polymérisation) des composés carbonylés insaturés, la co-réticulation ayant lieu lors de la phase de filmification/formation du revêtement final (autoréticulation de la dispersion au séchage) . Une telle réticulation est connue pour améliorer la résistance mécanique du film. De telles utilisations courantes du diacétone acrylamide sont décrites par exemple dans EP-A-1 029 006. Les co-agents de réticulation les plus courants avec des composés du type diacétone acrylamide sont des dérivés d'hydrazide (avec des acides carboxyliques). Les compositions aqueuses de polymère ou de revêtement qui en résultent et qui sont connues dans l'état antérieur de la technique, impliquent nécessairement la présence forcée avec les dérivés de type (D) d'agents de coréticulation du type dérivés d'hydrazide, amine ou époxy.

Conformément à un mode de réalisation particulier de la présente invention, la taille moyenne des particules de polymère présentes dans ladite pré-émulsion totalement ou partiellement polymérisée a été contrôlée pour ne pas dépasser 95 nm, en particulier pour ne pas dépasser 85 nm et, plus particulièrement, pour ne pas dépasser 65 nm.

Les méthodes de mesure et de contrôle de la taille moyenne des particules dans la pré-émulsion totalement ou partiellement polymérisée, avant que le flux principal des composants monomères, de préférence sous forme émulsifiée, soit mélangé avec elle (en au moins une étape), sont bien connues de l'homme du métier, par exemple par E. A. COLLINS, 18th Annual Short Course (Juin 1987) de l'Institut d'Emulsion des Polymères, Université Lehigh (Pennsylvanie), par E.A.COLLINS, J.A. DAVIDSON et C.A. DANIELS, J.Paint Technology 47, 35 (1975) et par les principes de fonctionnement de l'appareil AutoSizer Lo-C de MALVERN INSTRUMENTS.

L'homme du métier peut également contrôler que la taille moyenne des particules de polymère présentes dans la pré-émulsion totalement ou partiellement polymérisée n'excède pas 85 nm soit par la durée de polymérisation dudit flux partiel (2 à 20% en poids de la totalité des composants monomères) de pré-émulsion, qui devra de préférence ne pas dépasser environ 45 minutes ou bien par le taux global de conversion des monomères dans ledit flux partiel de pré-émulsion, qui doit atteindre au moins 50% et, de préférence au moins 90% en poids des monomères et jusqu'à moins de 100% et plus particulièrement jusqu'à une conversion de 98%.

Le type et les proportions des monomères mis en oeuvre selon la présente invention seront choisis, selon les connaissances générales de l'homme du métier de la polymérisation en émulsion, en vue de procurer un (co) polymère ayant une température de transition vitreuse d'au plus 10°C et/ou une température minimale de filmification d'au plus 5°C.

Conformément à la présente invention, le composant (D) représente avantageusement 0,1 à 2,5 parties en poids, en particulier 0,2 à 0,75 partie en poids, pour 100 parties en poids des monomères (A) + (B) + (C) + (D).

Le diacétone acrylamide et le diacétone méthacrylamide, représentés par la formule générale (I) ci-dessus, sont les composés (D) préférés pour la présente invention avec un taux de 0,01 à 5 %, plus particulièrement de 0,1 à 2,5%, et encore plus préférentiellement de 0,2 à 0,75% en poids, par rapport au taux global final de l'ensemble des monomères (A) + (B) + (C) +(D).

Comme esters (méth)acryliques (A) utilisables dans les compositions de monomères selon l'invention, on peut citer l'acrylate de méthyle, l'acrylate d'éthyle, l'acrylate de n-butyle, l'acrylate de tertiobutyle, l'acrylate de 2-éthylhexyle, le méthacrylate de méthyle. Le constituant (A) représente avantageusement 50 à 99,99 parties en poids, de préférence 60 à 99,99 parties en poids, pour 100 parties en poids des monomères (A) + (B) + (C) + (D).

Comme monomères vinylaromatiques (B) utilisables dans les compositions de monomères selon l'invention, on peut citer le styrène, l'α-méthylstyrène, le vinyltoluène, le p-tertiobutylstyrène, l'ortho-, le méta- et le paraméthylstyrène, l'ortho-, le méta- et le paraéthylstyrène, l'o-méthyl-p-isopropylstyrène, le p-chloro-styrène, le p-bromostyrène, l'o,p-dichlorostyrène, l'o,p-dibromostyrène, le vinylnaphtalène, divers vinyl(alkylnaphtalènes) et vinyl(halonaphtalènes). Le constituant (B) représente avantageusement de 0 à 40 parties en poids, de préférence 1 à 40 parties en poids et, plus préférentiellement, de 15 à 40 parties en poids, pour 100 parties en poids des monomères (A) + (B) + (C) + (D).

Comme acides mono- ou polycarboxyliques α,β insaturés à chaîne courte (C) utilisables dans les compositions de monomères selon l'invention, on peut citer l'acide acrylique, l'acide méthacrylique, l'acide itaconique, l'acide crotonique, l'acide maléique, l'acide fumarique, l'acide vinylbenzoïque. Le constituant (C) représente avantageusement 0,1 à 5 parties en poids, de préférence 0,1 à 2,5 parties en poids, pour 100 parties en poids des monomères (A) + (B)

+ (C) + (D).

La composition de monomères de l'invention peut en outre comprendre :

(E) jusqu'à 3 parties en poids d'au moins un monomère autre que (A), (B), (C), (D), copolymérisable avec ces derniers, pour 100 parties en poids des monomères (A) + (B) + (C) + (D).

A titre d'exemples de ces autres monomères (E), on peut citer les amides $\alpha,\beta$-insaturés à chaîne courte, tels que l'acrylamide, le méthacrylamide, le N-hydroxyméthylacrylamide, le N-hydroxyméthyl-méthacrylamide, le N-méthoxyméthylacrylamide, le N-méthoxyméthylméthacrylamide, le N-butoxyméthylacrylamide, le n-butoxyméthylméthacrylamide, le N-isopropoxyméthylacrylamide, le N-isoamyloxyméthylméthacrylamide, le N-octoxyméthylacrylamide.

Le système réactionnel servant à la préparation de la dispersion de l'invention peut comprendre, en plus des monomères cités plus haut [(A) à (E)] :

(F) jusqu'à 2, en particulier jusqu'à 0,5 parties en poids d'au moins un agent de transfert de chaîne pour 100 parties en poids des monomères (A) + (B) + (C) + (D) ,

afin de régler la masse moléculaire moyenne en nombre du polymère résultant.

A titre d'exemples de composés utilisables comme agents de transfert de chaîne dans la présente invention, on peut citer les alkylmercaptans linéaires ou ramifiés et des acides mercaptocarboxyliques ayant de 2 à 8 atomes de carbone et leurs esters tels que l'acide mercaptoacétique, les acides mercapto-2 et mercapto-3 propioniques, l'acide mercapto-2 benzoïque, l'acide mercaptosuccinique, l'acide mercaptoisophtalique et leurs esters d'alkyle. On préfèrera utiliser des esters d'un acide mercaptomonocarboxylique et/ou d'un acide mercapto-dicarboxylique ayant de 2 à 6 atomes de carbone, plus particulièrement des esters d'alkyle d'un acide mercaptopropionique, plus spécialement les esters d'isooctyle ou de n-dodécyle de l'acide mercaptopropionique ou le n-dodécylmercaptan.

Egalement, la dispersion aqueuse de polymère de l'invention comprend au moins un agent tensio-actif, et avantageusement :

(G) 0,5 à 5 parties en poids, en particulier 0,5 à 3 parties en poids, d'au moins un agent tensio-actif anionique ; et
(H) 0 à 5 parties en poids, en particulier 0 à 3 parties en poids, d'au moins un agent tensio-actif non-ionique,

ces quantités étant calculées sur la base des matières solides ou sèches (pour tensioactif à 100% d'extrait sec) et exprimées par rapport à 100 parties en poids des monomères (A) + (B) +(C) + (D) de la composition globale engagée dans le latex final. Les taux indiqués sont donc des taux globaux sur le produit (dispersion) final obtenu après la fin de la polymérisation en émulsion.

Le composant (G) (au moins un tensio-actif anionique) est nécessairement présent comme tensio-actif dans toutes les étapes de polymérisation : prépolymérisation totale ou partielle et étapes additionnelles de poursuite de la polymérisation en émulsion. Sa présence est donc nécessaire dans toutes les compositions de monomères émulsifiées impliquées dans chacune des étapes mentionnées.

Le composant (H) (au moins un tensio-actif non-ionique) peut également être présent, auquel cas il est introduit (1) soit avec la charge de prépolymérisation, (2) soit à la fin de la dernière étape de polymérisation, (3) soit à la fois avec la charge de prépolymérisation et après la fin de la dernière étape de polymérisation. De préférence (H) est introduit en totalité après la fin de la dernière étape de polymérisation, afin d'améliorer la stabilité de la dispersion aqueuse finale. Cette stabilité est encore accrue par l'addition de (H) selon (3).

Les taux globaux de (H) (pour 100 parties de monomères dans latex final) sont notamment, pour chacune des options (1) et (2), de 0,2 à 5%, de préférence de 0,2 à 3% ; et pour l'option (3) , de 0,2 à 4% à chacun des deux moments indiqués, le taux global de (H) ne dépassant pas 5%.

En particulier, lorsque l'on introduit (H) avec la charge de monomères de prépolymérisation, le taux de (H) par rapport à la quantité cumulée de tensio-actifs (H) + (G) à cette étape varie de préférence de 10 à 50%.

En particulier, le taux de tensio-actif anionique, présent après la prépolymérisation totale ou partielle, par rapport aux monomères totaux (latex final) est de 0,2 à 2 %. Environ jusqu'à la moitié de la quantité de (G) total est avantageusement présente déjà à l'étape de prépolymérisation (totale ou partielle).

Comme agents tensio-actifs anioniques (G), on peut citer des sulfates et sulfonates de masse moléculaire élevée, par exemple des alkyl-, aryl- et alkylarylsulfates et sulfonates de sodium et de potassium, tels que le 2-éthylhexylsulfate de sodium, le 2-éthyl-hexylsulfate de potassium, le nonylsulfate de sodium, l'undécylsulfate de sodium, le tridécylsulfate de sodium, le pentadécyl-sulfate de sodium, le laurylsulfate de sodium, le méthylbenzènesulfonate de sodium, le méthylbenzènesulfonate de potassium, le toluènesulfonate de potassium et le xylènesulfonate de sodium ; des alcools gras supérieurs, tels que ceux de stéaryle et de lauryle, qui ont été éthoxylés et sulfonés ; des dialkyl esters de sels alcalins d'acide sulfosuccinique, tels que le diamylsulfosuccinate de sodium ; et des produits de

condensation formaldéhyde/acide naphtalènesulfonique.

Comme agents tensio-actifs non-ioniques (H), on peut citer des polyéthers, tels que des condensats d'oxyde d'éthylène et d'oxyde de propylène, des éthers et des thioéthers d'alkyle et alkylaryl polyéthylène glycols et polypropylène glycols, des alkylphénoxypoly(éthylèneoxy)-éthanols, des dérivés polyoxyalkylénés d'esters partiels d'acide gras à chaîne longue, des condensats d'oxyde d'éthylène avec des alkylmercaptans supérieurs, des dérivés d'oxyde d'éthylène d'acides carboxyliques à chaîne longue et d'alcools. Ces tensio-actifs non-ioniques contiennent de préférence d'environ 10 à 100 motifs éthylèneoxy par molécule et encore plus préférentiellement d'environ 20 à 50 telles unités.

La quantité d'eau utilisée dans le milieu réactionnel est en général déterminée par le taux de solides désiré dans l'émulsion polymère finie, qui se situe en général entre 40% et 70%, de préférence 45 et 60% en poids.

Les composants monomères des latex de la présente invention ont été polymérisés au moyen de quantités efficaces, de préférence entre 0,2 et 2% en poids de la charge totale de monomères, d'au moins un initiateur de radicaux libres conventionnel. Un tel initiateur est, de préférence, substantiellement hydrosoluble. De tels initiateurs comprennent des peroxydes minéraux, tels que le peroxyde d'hydrogène, des persulfates et perborates de métal alcalin et des système redox tels que des combinaisons d'un persulfate, perborate ou perchlorate d'ammonium ou de métal alcalin avec un bisulfite de métal alcalin.

La température de polymérisation requise pour produire les latex polymères aqueux de la présente invention, à la fois dans l'étape de prépolymérisation totale ou partielle impliquant de 2 à 20% en poids de la charge globale totale de monomères et dans la ou les étapes de polymérisation principale impliquant le reste des monomères, varie généralement d'environ 40 à 95°C - de préférence d'environ 55 à 85°C - en fonction de la durée prévue pour la polymérisation. La durée de la ou des étapes de polymérisation principale avec addition en au moins une fois de 80 à 98 % en poids des composants monomères restants au milieu réactionnel se situe généralement à environ 60 minutes à 8 heures, de préférence 90 minutes à 3 heures, cette durée étant plus élevée lorsque la température de polymérisation est plus basse.

En particulier, la dispersion aqueuse de polymère selon l'invention est avantageusement celle obtenue par un procédé comprenant les étapes successives suivantes :

(a) prépolymérisation totale ou partielle en émulsion de 2 à 20 % en poids de la composition globale des monomères (A) à (E), avec dans le cas d'une prépolymérisation partielle un taux global de conversion des monomères d'au moins 50%, de préférence d'au moins 90%, jusqu'à moins de 100% et en particulier jusqu'à 98% ;
(b) addition continue de 40 à 49 % en poids de la composition des monomères (A) à (E) à ladite pré-émulsion obtenue en (a), pendant 45 à 180 minutes, et poursuite de la polymérisation en émulsion pendant 0 à 60 minutes ; et
(c) addition continue des 40 à 49 % en poids restants de la composition des monomères (A) à (E) à l'émulsion obtenue à l'étape (b), pendant 15 à 120 minutes, et poursuite de la polymérisation en émulsion pendant 0 à 60 minutes,

tous les composants monomères ayant été introduits sous une forme émulsifiée. Les compositions de monomères impliquées dans les étapes (a), (b) et (c) dudit procédé peuvent être identiques pour les trois étapes mentionnées ou différentes à chaque étape, à la condition que lesdites compositions et leurs proportions spécifiques, associées pour chacune des ces étapes soient telles que la composition globale des monomères dans le produit final soit dans les plages définies précédemment pour les composants monomères (A) à (E).

Dans un mode de réalisation particulier, ledit procédé comprend une étape supplémentaire finale (d) d'addition d'au moins un tensio-actif non ionique (H) dans le produit fini avec un taux global par rapport à la somme globale des monomères allant de 0,2 à 5 % et plus préférentiellement de 0,2 à 3%.

Selon un autre mode d'exécution particulier pouvant être combiné avec le mode précédent, à l'étape de prépolymérisation (totale ou partielle), au moins un tensio-actif non ionique (H) est combiné avec au moins un tensio-actif anionique (G), le tensioactif non ionique (H)représentant préférentiellement de 10 à 50 % de la somme cumulée des tensio-actifs (G) et (H) dans cette étape. Plus particulièrement, le taux de tensio-actifs anioniques (G) présents à cette étape représente environ jusqu'à la moitié de la quantité totale finale de ces tensio-actifs (G).

Avantageusement, la dispersion (latex) finale selon l'invention a été soumise, selon une autre variante de ce procédé, à une étape supplémentaire (c') de post-traitement au moyen d'un système initiateur de radicaux libres ayant un court temps de demi-vie afin d'atteindre un taux de monomère résiduel ne dépassant pas 50 ppm. Par rapport à la présence possible de l'étape (d) précédemment décrite, cette étape (c') est réalisée avant l'étape (d).

L'émulsion selon l'invention est notamment une émulsion permettant de parvenir à des valeurs de lessivabilité, mesurées selon la norme DIN 53778, aussi élevées qu'au moins 2400 cycles pour une mesure effectuée après 28 jours de séchage sur un film de peinture comprenant 6 % en poids de ladite composition polymère (calculés en extrait sec).

La présente invention porte également sur un procédé particulier de fabrication de l'émulsion polymère aqueuse telle que définie ci-dessus, caractérisé par le fait que

(a) dans une première étape, on introduit dans un réacteur 2 à 20 % en poids de la composition des monomères (A) à (E) et on conduit une prépolymérisation totale ou partielle en émulsion, avec dans le cas d'une prépolymérisation partielle un taux global de conversion de monomères d'au moins 50 %, de préférence d'au moins 90%, et jusqu'à moins de 100% et en particulier jusqu'à 98%;
(b) dans une deuxième étape, on ajoute en continu 40 à 49 % de la composition des monomères (A) à (E) en l'espace de 45 à 180 minutes, et on poursuit la polymérisation en émulsion pendant 0 à 60 minutes ; et
(c) dans une troisième étape, on ajoute en continu les 40 à 49 % restants de la composition des monomères (A) à (E) en l'espace de 15 à 120 minutes, et on poursuit la polymérisation en émulsion pendant 0 à 60 minutes, jusqu'à achèvement,

tous les composants monomères étant introduits sous forme émulsifiée.
Conformément à différentes caractéristiques plus particulières du procédé :

- à chacune des étapes, on introduit au moins un agent tensio-actif anionique (G) représentant un taux cumulé final de 0,5 à 5 % en poids par rapport à la somme globale des monomères (A) à (D) dans le produit final ;
- au moins un tensio-actif non-ionique (H) est ajouté après la fin de la polymérisation principale en émulsion avec un taux global par rapport aux monomères (A) à (D) étant de 0,2 à 5 % ;
- au moins un tensio-actif non-ionique (H) peut être combiné avec un tensio-actif anionique (G) à l'étape de la prépolymérisation totale ou partielle, avec le tensioactif non ionique représentant de 10 à 50% des tensio-actifs cumulés (G)+(H) de l'étape, le tensio-actif anionique (G) représentant à cette étape avantageusement environ jusqu'à la moitié de la quantité totale finale de ces tensio-actifs (G) ;
- on conduit la prépolymérisation totale ou partielle de la première étape en contrôlant la taille des particules de polymère, afin d'obtenir une pré-émulsion ayant une taille moyenne de particules de polymère ne dépassant pas 95 nm, de préférence ne dépassant pas 85 nm et, plus particulièrement, ne dépassant pas 65 nm ; le taux de conversion des monomères dans le cas d'une prépolymérisation partielle est d'au moins 50% de préférence d'au moins 90% et jusqu'à moins de 100% en particulier jusqu'à 98% ;
- on conduit la première étape pendant 5 à 45 minutes, à une température de 70 à 85°C ;
- on ajoute le restant des monomères à la deuxième et à la troisième étape à une température comprise entre 65 et 75°C, et l'on poursuit la polymérisation à chacune de ces étapes en élevant la température à une valeur comprise entre 75 et 85°C ; et
- on utilise trois mélanges de monomères dans les trois étapes respectives, qui peuvent avoir chacun les mêmes proportions de monomères que la composition (A) + (B) + (C) + (D) + (E), définie précédemment ou dont au moins deux ont des proportions différentes ; ainsi, la composition de la charge de monomères durant l'étape de prépolymérisation (totale ou partielle) peut être la même que, ou bien peut être différente de, la composition de la charge de monomères ajoutée au cours des deux étapes de polymérisation principale, pourvu cependant que la composition globale finale des monomères soit en accord avec la définition générale de la composition de monomères indiquée ci-dessus.

En vue d'atteindre un taux final de conversion de la réaction de polymérisation le plus proche de 100%, il peut être souhaitable de faire suivre la troisième étape (c) par une étape (c') de cuisson de la dispersion aqueuse de polymère pendant environ 30 à 90 minutes à une température de préférence d'au moins 8°C supérieure à la température de polymérisation (post-cuisson).
Une amélioration complémentaire de la présente invention réside dans le traitement de l'émulsion polymère aqueuse après la troisième étape (c) et, le cas échéant, après l'étape de post-cuisson (c'), au moyen d'un système d'initiation de radicaux libres ayant un temps de demi-vie court à la température considérée en vue d'atteindre un taux de conversion global proche de 100% et/ou un taux résiduel de monomères ne dépassant pas environ 50 ppm. Comme exemples de systèmes initiateurs de radicaux libres, on peut citer des peroxydes organiques et minéraux, tels que l'hydroperoxyde de tertiobutyle, le peroxyde de butyle, le peroxyde d'hydrogène ou des persulfates de métal alcalin, en combinaison avec un agent réducteur, tel que le formaldéhydesulfoxylate de sodium, l'acide ascorbique, le sel de Mohr. Un tel traitement peut être effectué à des températures de 40°C à 90°C environ.
Lorsque le latex préparé en conformité avec la présente invention paraîtra trop acide pour entrer dans la formulation de peintures, il pourra être souhaitable d'ajuster son pH à une valeur supérieure à 7, par exemple au moyen de toute matière alcaline, telle que les hydroxydes de sodium, de potassium ou d'ammonium.
La présente invention porte également sur l'utilisation d'une émulsion polymère aqueuse telle que définie ci-dessus ou préparée par le procédé tel que défini ci-dessus, dans des revêtements de protection et/ou de décoration sur des substrats tels que les parois murales, le bois, les métaux, les matières plastiques, les composites, etc., et ceci

pour un usage interne ou externe et, plus particulièrement, pour des peintures de protection et/ou décoratives à usage interne et/ou externe pour de tels substrats.

Un autre objet de la présente invention consiste en une composition de peinture, avantageusement sans plastifiant et sans agent de coalescence, comprenant comme liant au moins une émulsion aqueuse de polymère du type décrit ci-dessus ou préparée par le procédé particulier tel que décrit ci-dessus, ladite peinture aqueuse possédant des performances extraordinairement élevées et en particulier une lessivabilité significativement améliorée par rapport à celle des peintures aqueuses selon EP-B-0 690 882. En particulier, les compositions de peinture selon la présente invention renferment avantageusement moins de 10% en poids dudit liant (calculés en extrait sec). Comme précédemment indiqué, ces peintures possèdent avantageusement une valeur de lessivabilité, mesurée selon la norme DIN 53778, d'au moins 2400 cycles pour une mesure effectuée après 28 jours de séchage sur un film de peinture comprenant 6% en poids de ladite composition polymère (calculés en extrait sec).

La méthode de formulation utilisée peut être l'une quelconque de celles connues jusqu'ici dans la technique de formulation des peintures au latex. Essentiellement, les peintures aqueuses selon l'invention comprennent un mélange de matière pigmentaire et de latex. La matière pigmentaire est, de préférence, utilisée sous une forme convenablement réduite en poudre par des moyens conventionnels, ainsi que tous les autres adjuvants solides optionnels décrits ci-après.

Pour combiner les ingrédients de penture afin de formuler la peinture au latex de la présente invention, un ou plusieurs pigments primaires et éventuellement d'autres adjuvants (qui eux-mêmes peuvent être liquides ou solides) peuvent être incorporés au liant latex pour former un mélange uniforme simplement en ajoutant toutes les matières premières dans un récipient agité. Bien qu'il soit possible de combiner les pigments et autres avec l'émulsion et de broyer ou piler le mélange dans un broyeur-disperseur, il est souhaitable de préparer d'abord une pâtes aqueuse de pigment et d'adjuvants, de préférence avec l'aide d'un agent dispersant, dans un dispositif à haut gradient de cisaillement, puis de combiner la pâte obtenue avec le latex. La consistance de la pâte peut être contrôlée par les quantités respectives d'eau, de pigments et d'adjuvants utilisés.

Les matières pigmentaires qui peuvent être utilisées pour formuler les peintures aqueuses de la présente invention comprennent (mais sans y être limitées) des pigments primaires conventionnels ou des bases colorantes telles que l'oxyde de titane, le noir de carbone, le sulfure de cadmium, le séléniure de cadmium, la phtalocyanine de cuivre, l'oxyde de zinc, le sulfure de zinc, l'oxyde de fer, l'oxyde de chrome. La proportion de matière pigmentaire utilisée pour formuler une peinture aqueuse selon la présente invention est déterminée par un certain nombre de facteurs, comprenant la profondeur de couleur désirée et le pouvoir couvrant. Etant donné que la présente invention est principalement applicable à des peintures mates c'est-à-dire selon la norme DIN 53778 (partie 1), offrant une réflexion supérieure à 7% mais inférieure à 45% sous un angle de 85°, la concentration pigmentaire en volume est, de préférence, comprise entre 70% et 95% environ.

En complément des pigments primaires, un ou plusieurs adjuvants peuvent, si désiré, être inclus dans la formulation des peintures aqueuses de la présente invention. De tels ingrédients comprennent (mais sans y être limités) :

- des dispersants, aussi dénommés défloculants, c'est-à-dire des composés capables d'amplifier la formation de charges électriques de même signe à la surface des particules de polymère et, par conséquent, de promouvoir la création de forces répulsives de nature électrique entre ces particules, tels que des silicates (en particulier des métasilicates) de métal alcalin, des polyphosphates de métal alcalin et des sels de métal alcalin de polyacides organiques (en particulier des polyacrylates) ;
- des agents mouillants, c'est-à-dire des composés capables de modifier la tension de surface du milieu, comprenant généralement des groupes de nature hydrophile et hydrophobe. Ils peuvent inclure des agents tensio-actifs anioniques (par exemple des alkylarylsulfonates de métal alcalin), cationiques (par exemple des sels d'ammonium quaternaires) ou non-ioniques (par exemples des polyétheroxydes) ;
- des modificateurs de rhéologie ou épaississants, tels que des polymères hydrosolubles modifiés par des groupes hydrophobes (par exemple éthoxylate d'uréthane modifié hydrophobe), et des dérivés d'hydroxyalkyl cellulose ;
- des bases minérales, c'est-à-dire par exemple l'ammoniaque, l'hydroxyde de sodium ou de potassium ;
- des agents anti-moussants tels qu'un mélange d'huile minérale et d'émulsifiant non-ionique ;
- des biocides, c'est-à-dire des composés capables de détruire les microorganismes, tels que des dérivés de chloroallyle ou d'isothiazolone ;
- des anticorrosifs tels qu'une solution aqueuse de benzoate de sodium et/ou de nitrite de sodium ;
- des insecticides, pesticides, fongicides et acaricides, tels que des composés pyréthrinoïdes (par exemple la décaméthrine ou la diledrine), le lindane, des composés N-hétérocycliques, des composés uracyles, des dérivés de triazole, des composés organophosphorés.

Le choix des adjuvants particuliers et leurs quantités respectives sont généralement dictés par les propriétés

désirées pour une peinture aqueuse particulière et sont à la portée de l'homme du métier. En général cependant, les peintures au latex de la présente invention possèdent un taux de matières solides global compris entre environ 40 et 70% en poids.

Les peintures aqueuse de la présente invention peuvent être appliquées à la surface d'un mur ou à tout autre substrat par tout moyen conventionnel, par exemple brosse, rouleau, pistolet. La peinture peut être réticulée ou séchée après application sur le substrat, également par des moyens conventionnels, par exemple séchage à l'air, cuisson. Le revêtement de peinture, réticulé ou non, possède d'excellents performances en ce qui concerne la résistance au jaunissement, la lessivabilité et la coalescence à basse température. En outre, les surfaces revêtues au moyen des peintures au latex selon la présente invention se comportent bien à l'égard du rapport de contraste (c'est-à-dire le pouvoir couvrant).

Les exemples suivants illustrent la présente invention sans toutefois en limiter la portée. Dans ces exemples, les parties et pourcentages sont en poids sauf indication contraire. Les abréviations suivantes ont été utilisées pour désigner les monomères utilisés :

- ABu : acrylate de butyle
- AA : acide acrylique
- St : styrène
- AM : acrylamide
- DAAM : diacétone acrylamide.

Les agents tensio-actifs utilisés étaient les suivants:

- Nonyphénol éther sulfate de sodium polyoxyéthyléné à 25 moles d'oxyde d'éthylène (tensio-actif anionique), commercialisé par la Société « WITCO » sous la marque « REWOPOL® NOS 25 » (35% actif) ;
- Ether sulfosuccinate d'alcools gras disodique (tensio-actif anionique), commercialisé par la Société « CYTEC » sous la marque « REWOPOL® SBFA 50 » (30% actif) ;
- Nonylphénol polyoxyéthyléné à 25 moles d'oxyde d'éthylène (tensio-actif non-ionique), commercialisé par la Société « COGNIS » sous la marque « DISPONIL® NP 2528 » (28% actif) ;
- Alcools linéaires en $C_{12}$-$C_{14}$, polyéthoxylés à 30 moles d'oxyde d'éthylène (tensio-actif non-ionique, commercialisé par la Société « COGNIS » sous la marque « DISPONIL® A-3065 » (65% actif).

Dans les exemples suivants, les agents tensio-actifs ont été désignés par les marques ci-dessus sous lesquelles ils sont commercialisés.

<u>EXEMPLES 1 ET 2 (DE L'INVENTION)</u> : <u>Préparation des Emulsions Polymères Aqueuses</u>

<u>Mode opératoire général</u> :

<u>Préparation d'une pré-émulsion PE des monomères :</u>

On prépare d'abord une pré-émulsion d'alimentation PE constituée par de l'eau déminéralisée, au moins un tensio-actif, les monomères et le n-dodécyl mercaptan (agent de transfert de chaîne). La composition et les proportions des constituants de cette pré-émulsion sont indiqués dans le Tableau 1. Pour cela, on ajoute à température ambiante (23°C) les ingrédients de la pré-émulsion PE dans l'ordre indiqué dans le Tableau 1, dans un récipient équipé d'un agitateur.

<u>Première étape</u> : <u>Prépolymérisation partielle</u>

Dans un réacteur équipé d'un dispositif d'agitation, on introduit une charge $A_f$ constituée par de l'eau et un agent tensio-actif tel qu'indiqué dans le Tableau 1, dans les proportions également indiquées dans le Tableau 1.

On porte la température à 76°C sous agitation à 100 tpm et on maintient le milieu à cette température pendant 10 minutes sous agitation.

On introduit ensuite dans le réacteur, en l'espace de 10 minutes, une charge $B_f$ (ensemencement initial) constituée par 3,5 % de la pré-émulsion d'alimentation PE. On chauffe alors le réacteur à 76 °C, puis on le maintient à cette température. On ajoute alors dans le réacteur une solution aqueuse $C_f$ de persulfate d'ammonium (initiateur), puis une solution aqueuse $D_f$ de métabisulfite d'ammonium (activateur), solutions dont la composition et les proportions sont indiquées dans le Tableau 1. On ajoute ensuite de l'eau ($E_f$) pour rincer les conduites. La polymérisation est alors poursuivie pendant environ 20 minutes et la température commence à diminuer et atteint 80°C.

Deuxième Etape : Premier stade de polymérisation principale

. Additions :

Lorsque la température atteint 80°C, on commence à refroidir à 71°C en diminuant la température de 0,9°C/minute après quoi la température de 71°C est maintenue, et simultanément, on commence l'introduction en continu dans le réacteur, à vitesse uniforme :

- d'une charge $F_f$ constituée par 48,25 % de la pré-émulsion PE, pendant 90 minutes ; et en même temps
- d'une solution aqueuse $G_f$ de persulfate d'ammonium (initiateur) comme indiqué dans le Tableau 1 également pendant 90 minutes,
- une heure après le commencement de l'introduction de la charge $F_f$ et de la solution $G_f$, on augmente l'agitation à 150 tpm (tours par minute), à raison de 50 tpm/heure.

. Cuisson :

A la fin des additions, on maintient la température du réacteur à 71°C pendant 45 minutes, toujours sous agitation.

Troisième étape : Second stade de polymérisation principale

. Additions :

Lorsque la cuisson de l'étape précédente est terminée, on commence l'introduction simultanée en continu dans le réacteur, à vitesse uniforme, toujours sous agitation et avec maintien de la température à 71°C :

- d'une charge $H_f$ constituée par les 48,25 % restants de la pré-émulsion PE, pendant 60 minutes ; et
- en même temps, également pendant 60 minutes, d'une solution aqueuse $I_f$ de persulfate d'ammonium (initiateur), comme indiqué dans le Tableau 1.

. Cuisson :

On ajoute ensuite de l'eau ($J_f$) pour rincer la conduite par laquelle on a introduit les charges $F_f$ et $H_f$, et celle par laquelle on a introduit les solutions $G_f$ et $I_f$. On porte ensuite le réacteur de 71°C à 80°C, à raison d'une augmentation de 0,45°C par minute, puis on procède à une cuisson en maintenant le réacteur à 80°C pendant 45 minutes.

Post-traitement :

Lorsque la cuisson est terminée, on introduit simultanément à vitesse uniforme :

- une solution d'activateur $K_f$ (BRUGGOLITH® FF6), comme indiqué dans le Tableau 1, en l'espace de 60 minutes et
- également en l'espace de 60 minutes, une émulsion d'amorceur $L_f$ hydroperoxyde de tertiobutyle (TBHP) à 70%, également comme indiqué dans le Tableau 1.

Puis on rince les conduites avec de l'eau ($M_f$) et on maintient la température à 80°C pendant 30 minutes (post-cuisson).

On refroidit ensuite le réacteur jusqu'à 30°C, à raison de - 1°C/minute, pendant 50 minutes.

Lorsque la température de 30°C est atteinte, on ajoute à vitesse uniforme pendant 60 minutes une solution aqueuse de soude $N_f$, comme indiqué dans le Tableau 1 pour atteindre un pH de 8,3 ± 0,2. Lorsque cette phase de neutralisation est achevée, on ajoute une solution $O_f$ contenant un biocide (MERGAL® K 15) et un agent de stabilisation à base de tensioactif non-ionique DISPONIL® A 3065 comme indiqué dans le Tableau 1.

TABLEAU 1 :

| Composition des différents flux | | |
|---|---|---|
| EXEMPLE | 1<br>(invention) | 2<br>(invention) |
| Pré-émulsion PE* | | |
| . Eau déminéralisée<br>. Tensio-actifs<br>REWOPOL SBFA 50<br>DISPONIL A-3065 | <br><br>2,40<br>1,00 | <br><br>3,10<br>- |
| Monomères | | |
| AA<br>ABu<br>St<br>AM<br>DAAM | 2,50<br>61,40<br>35,60<br><br>0,50 | 2,50<br>61,40<br>35,60<br><br>0,50 |
| Agent de transfert de chaîne | | |
| n-dodécylmercaptan | 0,05 | 0,05 |
| Charge $A_f$ | | |
| Eau déminéralisée<br>REWOPOL® SBFA 50 | 11359<br>388(0,40) | 11359<br>388(0,40) |
| Charge $B_f$ | | |
| 3,5 % de la pré-émulsion PE | 1406 | 1406 |
| Solution d'initiateur $C_f$ | | |
| Eau déminéralisée<br>Persulfate d'ammonium | 84<br>35 | 84<br>35 |
| Solution d'activateur $D_f$ | | |
| Eau déminéralisée<br>Métabisulfite d'ammonium | 84<br>6 | 84<br>6 |
| Eau $E_f$ | 58 | 58 |
| Charge $F_f$ | | |
| 48,25% de la pré-émulsion PE | 19405 | 19405 |
| Solution d'initiateur $G_f$ | | |
| Eau déminéralisée<br>Persulfate d'ammonium | 1347<br>43 | 1347<br>43 |
| Charge $H_f$ | | |
| 48,25 % restants de la pré-émulsion PE | 19405 | 19405 |
| Solution d'initiateur $I_f$ | | |
| Eau déminéralisée<br>Persulfate d'ammonium | 1347<br>43 | 1347<br>43 |
| Eau $J_f$ | 346 | 346 |
| Solution activateur $K_f$ | | |
| Eau déminéralisée<br>BRUGGOLITH® FF6 | 792<br>87 | 792<br>87 |

* Les valeurs indiquées dans la partie pré-émulsion PE et celles indiquées entre parenthèses dans le reste du tableau sont exprimées en matières solides par rapport aux monomères totaux. Les autres valeurs indiquées sont en g.

TABLEAU 1 :

| Composition des différents flux | | |
|---|---|---|
| EXEMPLE | 1 (invention) | 2 (invention) |
| Emulsion $L_f$ | | |
| Eau déminéralisée<br>REWOPOL® SFBA 50<br>TBHP à 70 % | 663<br>100<br>124 | 663<br>100<br>124 |
| Eau $M_f$ | 174 | 174 |
| Solution $N_f$ de neutralisation | | |
| Eau déminéralisée<br>Hydroxyde de sodium à 45 % | 1513<br>561 | 1513<br>561 |
| Solution $O_f$ de biocide et de stabilisation | | |
| Eau déminéralisée<br>DISPONIL® A 3065<br>MERGAL K 15 | 116<br>432 (1,00)<br>84 | 116<br>432 (1,00)<br>84 |

EXEMPLE 3 (EP-B-0 690 882)

On a préparé un latex selon le brevet européen EP-B-0 690 882 en utilisant la pré-émulsion de l'Exemple 2

- excepté que les 3,10%(*) de REWOPOL® SBFA 50 ont été remplacés par 0,95 %(*) de REWOPOL® NOS 25 et 6.40 %(*) de DISPONIL® NP 2528 ;
- en utilisant une charge $A_f$ dans laquelle les 0,40 %(*) de REWOPOL® SBFA 50 ont été remplacés par 0,3 %(*) de REWOPOL® NOS 25 ;
  (*) Les valeurs indiquées sont exprimées en matières solides par rapport aux momomères totaux.
- en utilisant une charge $B_f$ d'ensemencement initial de 10 % au lieu de 3,50 % de la pré-émulsion PE ;
- en ne pratiquant qu'une seule étape de polymérisation par addition continue, à une vitesse uniforme, des 90 % restants en l'espace de 4,5 heures ; et
- en n'introduisant pas de DISPONIL® A 3065 dans la solution $O_f$.

Les caractéristiques du latex obtenu sont rapportées dans le Tableau 2.

TABLEAU 2

| EXEMPLE | 1 (invention) | 2 (invention) | 3 (EP-B-690882) |
|---|---|---|---|
| Taux de matières solides (%) | 51,2 | 51,1 | 50,87 |
| pH | 8,2 | 8,94 | 8,35 |
| Taille des particules de semence (nm)* | 40 | | |
| Taille moyenne finale des particules du latex (nm) * | 104,3 | 88,8 | 140,1 |
| Polydispersité | 0,200 | 0,259 | |
| Viscosité Brookfield à 22°C (mPa.s)<br>LVT 2-3/30 tpm à 22°C (Poises) | 420<br>4,20 | 1120<br>11,20 | 2820<br>28,20 |
| Taux de monomères résiduels (ppm) | <50 | <50 | <200 |
| Température de filmification minimale (°C) | <0 | <0 | <0 |

* Mesurée par l'appareil Auto Sizer Lo-C de MALVERN INSTRUMENTS

EXEMPLE 4 : Performances de films formés à partir des émulsions aqueuses polymères obtenues

On a formé des films de chacune des émulsions aqueuses polymères obtenues en appliquant une couche d'émulsion de 100 µm sur une plaque de verre et en séchant pendant 2 heures à la température ambiante et pendant 16 heures à 50°C.

Les performances des films sont rapportées dans le Tableau 3.

TABLEAU 3

| Film formé à partir de l'émulsion de l'Exemple | 1 (invention) | 2 (invention) | 3 (EP-B-690882) |
|---|---|---|---|
| Aspect | Brillant | Brillant | Brillant |
| Évaluation du film après immersion pendant 1 heure/3 heures dans l'eau | | | |
| - Absorption d'eau * | 0/2 | 0/1-2 | 10 |
| - Gonflement ** | 2/4 | 2/4 | 10 |
| - Perte d'adhésion sur le verre *** | 3/5 | 3/7 | 10 |

* Absorption d'eau : les critères d'appréciation pour l'absorption d'eau sont les suivants :

0 : film totalement transparent

↓

film bleuâtre

↓

10 : film totalement blanc

** Gonflement : les critères d'appréciation pour le gonflement sont les suivants :

0 : aucun gonflement du film

↓

10 : film totalement gonflé.

*** Perte d'adhésion sur le verre : les critères d'appréciation pour la perte d'adhésion sur le verre sont les suivants :

0 : aucune perte d'adhésion du film

↓

10 : film totalement séparé du verre.

EXEMPLE 6 : Préparation et évaluation de compositions de peinture

Les dispersions aqueuses de polymères des Exemples 1 à 4 ont été formulées dans des compositions de peinture comprenant :

| | |
|---|---|
| - Eau | 287,20 parties |
| - Agent mouillant commercialisé par la Société « BENKIZER » sous la marque « LOPON® 890 » | 3,00 |
| - Agent mouillant et dispersant commercialisé par la Société « MUNZING » sous la marque « AGITAN® 281 » | 2,00 |
| - Biocide commercialisé par la Société « RIEDEL DE HAEN » sous la marque « MERGAL® K 15 » | 2,00 |
| - Agent épaississant (modificateur de rhéologie) commercialisé par la Société « HOECHST » sous la marque « TYLOSE® MH 6000 YG 8 » | 4,80 |
| - Oxyde de titane commercialisé par la société « SACHTLEBEN » sous la marque « HOMBITAN R 611 » | 50,00 |
| - Carbonate de calcium commercialisé par la Société « DEUTSCHE SOLVAY » sous la marque « SOCAL PZ » | 160,00 |
| - Craie | 250,00 |
| - Carbonate de calcium commercialisé par la Société « OMYA » sous la marque « OMYA CARB® 10 GU » | 110,00 |
| - Silice commercialisée par la Société « LANGER » sous la marque « DICALITE WB5 » | 10,00 |
| - Solution aqueuse de soude à 25 % | 1,00 |
| - Emulsion aqueuse de polymère | 120,00<br>1000,00 |

La lessivabilité ou résistance à l'abrasion à l'état humide (WSR - Wet Scrub Resistance) de ces peintures a été mesurée après 7 et 28 jours conformément à la norme DIN 53778. le Tableau 4 suivant indique les valeurs de lessivabilité, exprimée en cycles, en fonction de la nature de l'émulsion aqueuse polymère utilisée.

TABLEAU 4

| Lessivabilité de la peinture comportant l'émulsion aqueuse polymérisée de l'Exemple | 1 (invention) | 2 (invention) | 3 (EP-B-690882) |
|---|---|---|---|
| à 28 jours selon DIN 53778 | 2600 | 2750 | 1100 |

## Revendications

**1.** Dispersion aqueuse de polymère, préparée à partir d'une composition de monomères comprenant :

(A) 50 à 99,99 parties en poids d'au moins un ester acrylique ou méthacrylique dérivé d'acide acrylique ou méthacrylique et d'un alcool ayant 1 à 12 atomes de carbone ;
(B) 0 à 40 parties en poids d'au moins un monomère vinylaromatique ;
(C) 0 à 5 parties en poids d'au moins un acide mono- ou polycarboxylique $\alpha,\beta$-insaturé à chaîne courte ; et

(D) 0,01 à 5 parties en poids d'au moins un composé (D) monomère alpha-bêta éthyléniquement insaturé, comportant au moins un groupement carbonyle ayant au moins un atome d'hydrogène porté par un atome de carbone en position alpha dudit carbonyle,

pour 100 parties en poids des monomères (A) + (B) + (C) + (D) ,
80 à 98 % en poids des composants monomères ayant été ajoutés à un milieu réactionnel contenant déjà une pré-émulsion totalement ou partiellement polymérisée représentant de 2 à 20 % en poids du taux global final des composants monomères dans la dispersion finalement obtenue.

**2.** Dispersion aqueuse de polymère selon la revendication 1, **caractérisée par le fait qu'**elle ne comporte aucun composant ou groupement fonctionnel susceptible de réagir avec les motifs issus dudit ou desdits composés (D) dans une réaction d'autoréticulation.

**3.** Dispersion aqueuse de polymère selon l'une des revendications 1 et 2, **caractérisée par le fait que** le ou les composés (D) sont choisis parmi le diacétone acrylamide, le diacétone méthacrylamide, le 2-butanone (méth) acrylate, l'acétoacétate de vinyle et le (méth)acrylate d'acétoacétoxyéthyle.

**4.** Dispersion aqueuse de polymère selon la revendication 3, **caractérisée par le fait que** le ou les composés (D) sont choisis parmi le diacétone acrylamide et le diacétone méthacrylamide.

**5.** Dispersions aqueuse de polymère selon l'une des revendications 1 à 4, **caractérisée par le fait que** le composant (D) représente 0,1 à 2,5 parties en poids pour 100 parties en poids des monomères (A) + (B) + (C) + (D).

**6.** Dispersion aqueuse de polymère selon la revendication 5, **caractérisée par le fait que** le composant (D) représente 0,2 à 0,75 partie en poids pour 100 parties en poids des monomères (A) + (B) + (C) + (D).

**7.** Dispersion aqueuse de polymère selon l'une des revendications 1 à 6, **caractérisée par le fait que** le constituant (A) représente 60 à 99,9 parties en poids de (A) + (B) + (C) + (D).

**8.** Dispersion aqueuse de polymère selon l'une des revendications 1 à 7, **caractérisée par le fait que** le constituant (B) représente 1 à 40 parties en poids pour 100 parties en poids des monomères (A) + (B) + (C) + (D).

**9.** Dispersion aqueuse de polymère selon l'une des revendications 1 à 8, **caractérisée par le fait que** le constituant (C) représente 0,1 à 5 parties en poids pour 100 parties en poids des monomères (A) + (B) + (C) + (D).

**10.** Dispersion aqueuse de polymère selon l'une des revendications 1 à 9, **caractérisée par le fait que** la composition de monomères comprend en outre :

(E) jusqu'à 3 parties en poids d'au moins un monomère autre que (A), (B), (C), (D), copolymérisable avec ces derniers, pour 100 parties en poids des monomères (A) + (B) + (C) + (D).

**11.** Dispersion aqueuse de polymère selon l'une des revendications 1 à 10, **caractérisée par le fait que** le système réactionnel ayant servi à sa préparation comprend en outre :

(F) jusqu'à 2 parties en poids d'au moins un agent de transfert de chaîne pour 100 parties en poids des monomères (A) + (B) + (C) + (D).

**12.** Dispersion aqueuse de polymère selon l'une des revendications 1 à 11, **caractérisée par le fait qu'**elle renferme :

(G) 0,5 à 5 parties en poids d'au moins un agent tensio-actif anionique ; et
(H) 0 à 5 parties en poids d'au moins un agent tensio-actif non-ionique,

ces quantités étant calculées sur la base des matières solides ou sèches et exprimées par rapport à 100 parties en poids des monomères (A) + (B) + (C) + (D) dans la composition globale engagée dans le latex final.

**13.** Dispersion aqueuse de polymère selon l'une des revendications 1 à 12, **caractérisée par le fait que** la taille moyenne des particules de polymère présentes dans ladite pré-émulsion partiellement polymérisée a été contrôlée pour ne pas dépasser 95 nm.

**14.** Dispersion aqueuse de polymère selon l'une des revendications 1 à 13, **caractérisée par le fait qu'**elle a été obtenue par un procédé comprenant les étapes successives suivantes :

(a) prépolymérisation totale ou partielle en émulsion de 2 à 20 % en poids de la composition globale des monomères (A) à (E) ;
(b) addition continue de 40 à 49 % en poids de la composition des monomères (A) à (E) à ladite pré-émulsion totalement ou partiellement prépolymérisée, pendant 45 à 180 minutes, et poursuite de la polymérisation en émulsion pendant 0 à 60 minutes ; et
(c) addition continue des 40 à 49 % en poids restants de la composition des monomères (A) à (E) à l'émulsion obtenue à l'étape (b), pendant 15 à 120 minutes, et poursuite de la polymérisation en émulsion pendant 0 à 60 minutes,

tous les composants monomères ayant été introduits sous une forme émulsifiée.

**15.** Dispersion aqueuse de polymère selon l'une des revendications 1 à 14, **caractérisée par le fait qu'**elle a été soumise à une étape supplémentaire finale (d) d'addition d'au moins un tensio-actif non-ionique dans le produit fini avec un taux global par rapport à la somme globale des monomères allant de 0,2 à 5%.

**16.** Dispersion aqueuse selon l'une des revendications 1 à 15, **caractérisé par le fait qu'**à l'étape de prépolymérisation totale ou partielle, au moins un tensio-actif non ionique (H) est combiné avec au moins un tensio-actif anionique (G), le tensioactif non-ionique (H) représentant préférentiellement de 10 à 50 % de la somme cumulée des tensio-actifs (G) et (H) dans cette étape.

**17.** Dispersion aqueuse de polymère selon l'une des revendications 1 à 16, **caractérisée par le fait qu'**elle a été soumise à un post-traitement (c') au moyen d'un système initiateur de radicaux libres ayant un court temps de demi-vie afin d'atteindre un taux de monomère résiduel ne dépassant pas 50 ppm.

**18.** Dispersion aqueuse de polymère selon l'une des revendications 1 à 17, **caractérisée par le fait qu'**elle permet de parvenir à des valeurs de lessivabilité, mesurées selon la norme DIN 53778, aussi élevées qu'au moins 2400 cycles pour une mesure effectuée après 28 jours de séchage sur un film de peinture comprenant 6 % en poids de ladite composition polymère (calculés en extrait sec).

**19.** Procédé de fabrication d'une dispersion aqueuse de polymère telle que définie à l'une des revendications 1 à 18, **caractérisé par le fait que** :

(a) dans une première étape, on introduit dans un réacteur 2 à 20 % en poids de la composition des monomères (A) à (E) et on conduit une prépolymérisation totale ou partielle en émulsion avec dans le cas d'une prépolymérisation partielle un taux global de conversion de monomères d'au moins 50% et jusqu'à moins de 100%,
(b) dans une deuxième étape, on ajoute en continu 40 à 49 % de la composition des monomères (A) à (E) en l'espace de 45 à 180 minutes, et on poursuit la polymérisation en émulsion pendant 0 à 60 minutes ; et
(c) dans une troisième étape, on ajoute en continu les 40 à 49 % restants de la composition des monomères (A) à (E) en l'espace de 15 à 120 minutes, et on poursuit la polymérisation en émulsion pendant 0 à 60 minutes, jusqu'à achèvement,

tous les composants monomères étant introduits sous une forme émulsifiée.

**20.** Procédé selon la revendication 19, **caractérisé par le fait qu'**à chacune des étapes, on introduit avec la charge des monomères, au moins un agent tensio-actif anionique (G) représentant un taux cumulé final de 0,5 à 5 % en poids par rapport à la somme globale des monomères (A) à (E) dans le produit final.

**21.** Procédé selon l'une des revendications 19 et 20, **caractérisé par le fait qu'**au moins un tensio-actif non-ionique (H) est ajouté après la fin de la polymérisation principale en émulsion avec un taux global par rapport aux monomères (A) à (E) étant de 0,2 à 5 %.

**22.** Procédé selon l'une des revendications 19 à 21, **caractérisé par le fait qu'**au moins un tensio-actif non-ionique (H) est combiné avec un tensio-actif anionique (G) à l'étape de la prépolymérisation totale ou partielle, avec le tensioactif non-ionique (H) représentant de 10 à 50% des tensio-actifs cumulés de l'étape, le tensio-actif anionique (G) représentant à cette étape avantageusement environ jusqu'à la moitié de la quantité totale finale de ce tensio-actif anionique (G).

23. Procédé selon l'une des revendications 19 à 22, **caractérisé par le fait que** l'on conduit la prépolymérisation totale ou partielle de la première étape en contrôlant la taille des particules de polymère, afin d'obtenir une pré-émulsion ayant une taille moyenne de particules de polymère ne dépassant pas 95 nm.

24. Procédé selon l'une des revendications 19 à 23, **caractérisé par le fait que** l'on conduit la première étape pendant 5 à 45 minutes, à une température comprise entre 70 et 85°C.

25. Procédé selon l'une des revendications 19 à 24, **caractérisé par le fait que** l'on ajoute le restant des monomères à la deuxième et à la troisième étape à une température comprise entre 65 et 75°C, et que l'on poursuit la polymérisation à chacune de ces étapes en élevant la température à une valeur comprise entre 75 et 85°C.

26. Procédé selon l'une des revendications 19 à 25, **caractérisé par le fait que** l'on utilise trois mélanges de monomères dans les trois étapes respectives, qui ont chacun les mêmes proportions de monomères que la composition (A) + (B) + (C) + (D) + (E), ou dont au moins deux ont des proportions différentes.

27. Procédé selon l'une des revendications 19 à 26, **caractérisé par le fait que** l'on fait suivre la troisième étape (c) par une étape (c') de cuisson de la dispersion aqueuse de polymère pendant environ 30 à 90 minutes à une température de préférence d'au moins 8°C supérieure à la température de polymérisation.

28. Utilisation de la dispersion aqueuse de polymère telle que définie à l'une des revendications 1 à 17, ou préparée par le procédé tel que défini à l'une des revendications 19 à 27, dans des revêtements de protection et/ou de décoration sur des substrats tels que les parois murales, le bois, les métaux, les matières plastiques, les composites, et ceci pour un usage interne ou externe et, plus particulièrement, pour des peintures de protection et/ou décoratives à usage interne et/ou externe pour de tels substrats.

29. Composition de peinture comprenant, comme liant, au moins une dispersion aqueuse de polymère telle que définie à l'une des revendications 1 à 17, ou préparée par le procédé tel que défini à l'une des revendications 18 à 27.

30. Composition de peinture selon la revendication 29, **caractérisée par le fait qu'**elle ne comporte ni plastifiant, ni agent de coalescence.

31. Composition de peinture selon l'une des revendications 29 et 30, **caractérisée par le fait qu'**elle renferme moins de 10% en poids dudit liant (calculés en extrait sec).

32. Composition de peinture selon l'une des revendications 29 à 31, **caractérisée par le fait qu'**elle possède une valeur de lessivabilité, mesurée selon la norme DIN 53778, d'au moins 2400 cycles pour une mesure effectuée après 28 jours de séchage sur un film de peinture comprenant 6% en poids de ladite composition polymère (calculés en extrait sec).

Office européen des brevets

# RAPPORT DE RECHERCHE EUROPEENNE

Numéro de la demande
EP 01 00 0467

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,X | WO 94 21699 A (CRAY VALLEY SA) 29 septembre 1994 (1994-09-29) * revendication 1 * | 1-28 | C08F220/12 C08F2/22 C09D133/06 |
| X | US 3 431 226 A (H. WARSON) 4 mars 1969 (1969-03-04) * revendication 1 * | 1-28 | |

DOMAINES TECHNIQUES RECHERCHES (Int.Cl.7)

C08F

Le présent rapport a été établi pour toutes les revendications

| Lieu de la recherche | Date d'achèvement de la recherche | Examinateur |
|---|---|---|
| LA HAYE | 6 février 2002 | Cauwenberg, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 01 00 0467

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-02-2002

| Document brevet cité au rapport de recherche | Date de publication | Membre(s) de la famille de brevet(s) | Date de publication |
|---|---|---|---|
| WO 9421699 A | 29-09-1994 | FR 2703061 A1 | 30-09-1994 |
| | | AT 162823 T | 15-02-1998 |
| | | CN 1094742 A | 09-11-1994 |
| | | DE 69408306 D1 | 05-03-1998 |
| | | DE 69408306 T2 | 20-08-1998 |
| | | DE 690882 T1 | 02-05-1996 |
| | | DK 690882 T3 | 21-09-1998 |
| | | EP 0690882 A1 | 10-01-1996 |
| | | ES 2114682 T3 | 01-06-1998 |
| | | WO 9421699 A1 | 29-09-1994 |
| | | SG 48182 A1 | 17-04-1998 |
| US 3431226 A | 04-03-1969 | GB 1062338 A | 22-03-1967 |
| | | FR 1414394 A | 15-10-1965 |

EPO FORM P0460

Pour tout renseignement concernant cette annexe : voir Journal Officiel de l'Office européen des brevets, No.12/82